# EUROPEAN PATENT APPLICATION

(11) **EP 4 819 728 A1**
(43) Date of publication of application: **07.10.2026**
(21) Application number: 23959688.5
(22) Date of filing: 27.11.2023
(51) Int. Cl.: H04W 72/11

(54) **WIRELESS COMMUNICATION METHODS AND APPARATUSES, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); ZHANG, Yi, Dongguan, Guangdong 523860 (CN)
(74) Representative: Novagraaf Technologies
(86) International application number: PCT/CN2023/134496
(87) International publication number: WO 2025/111762

(57) **Abstract**

Wireless communication methods and apparatuses, a device and a storage medium, relating to the technical field of communications. A method comprises: a terminal device receives first information, the first information being used for indicating a type of information carried in a first channel, and the first channel being a periodically transmitted channel. For the periodically transmitted first channel, the first information is transmitted to terminal device to indicate the type of the information carried in the first channel, so that a network device can flexibly determine, on the basis of information such as currently transmitted service features and channel conditions, the type of the information transmitted by the first channel. Additionally, by means of the first information, the network device notifies the terminal device of the type of the information carried in the first channel, so that the terminal device can learn, on the basis of the first information, the type of the information that the network device is about to transmit in the first channel, thereby helping to improve the information transmission reliability and reception efficiency.

## Description

### TECHNICAL FIELD

Embodiments of the present disclosure relate to the technical field of communications, and in particular, relate to a method and apparatus for wireless communication, and a device and a storage medium therefor.

### RELATED ART

In downlink data transmission, a communication system typically supports dynamic scheduling and semi-persistent scheduling.

With the development of communication technologies, in some applications of a 6G ultra-reliable low-latency communication (URLLC), for example, data exhibits a relatively explicit characteristic of periodic arrival. However, the data volume transmitted in a single transmission is large, the dynamic range of the data volume is wide, or the transmission channel varies significantly. For such applications, using either of the above two schemes for downlink scheduling presents some drawbacks.

Therefore, further research on downlink transmission is required.

### SUMMARY

Embodiments of the present disclosure provide a method and apparatus for wireless communication, and a device and a storage medium therefor. The technical solutions according to the present disclosure are as follows:

According to one aspect of the embodiments of the present disclosure, a method for wireless communication is provided. The method is performed by a terminal device, and includes:

receiving first information, wherein the first information is used to indicate a type of information carried in a first channel, the first channel being a periodically transmitted channel;

wherein the type of the information includes at least one of data information or signaling information; or presence of the signaling information or absence of the signaling information; or presence of the data information or absence of the data information.

According to one aspect of the embodiments of the present disclosure, a method for wireless communication is provided. The method is performed by a network device, and includes:
transmitting first information, wherein the first information is used to indicate a type of information carried in a first channel, the first channel being a periodically transmitted channel;
wherein the type of the information includes: at least one of data information or signaling information; or presence of the signaling information or absence of the signaling information; or presence of the data information or absence of the data information.

According to another aspect of the embodiments of the present disclosure, an apparatus for wireless communication is provided. The apparatus includes:
a receiving module, configured to receive first information, wherein the first information is used to indicate a type of information carried in a first channel, the first channel being a periodically transmitted channel;
wherein the type of the information includes at least one of data information or signaling information; or presence of the signaling information or absence of the signaling information; or presence of the data information or absence of the data information.

According to another aspect of the embodiments of the present disclosure, an apparatus for wireless communication is provided. The apparatus includes:
a transmitting module, configured to transmit first information, wherein the first information is used to indicate a type of information carried in a first channel, the first channel being a periodically transmitted channel;
wherein the type of the information includes at least one of data information or signaling information; or presence of the signaling information or absence of the signaling information; or presence of the data information or absence of the data information.

According to another aspect of the embodiments of the present disclosure, a communication device is provided. The communication device includes a processor and a memory storing one or more computer programs, wherein the processor is configured to load and run the one or more computer programs to perform the method at the terminal device or the method at the network device.

According to another aspect of the embodiments of the present disclosure, a computer-readable storage medium is provided storing one or more computer programs. The one or more computer programs, when loaded and run by a processor, cause the processor to perform the method at the terminal device or the method at the network device.

According to another aspect of the embodiments of the present disclosure, a computer program product is provided. The computer program includes one or more program instructions stored in a computer-readable storage medium, wherein the one or more computer instructions, when loaded and executed by a processor, cause the processor to perform the method at the terminal device or the method at the network device.

The technical solutions according to the embodiments of the present disclosure may achieve the following beneficial effects:

For a periodically transmitted first channel, a type of information carried in the first channel is indicated by transmitting first information to the terminal device, such that the network device flexibly determines, based on current transmission service characteristics, channel conditions, and other information, the type of the information transmitted using the first channel. Furthermore, the network device informs the terminal device of the type of the information carried in the first channel via the first information, such that the terminal device is allowed to determine, based on the first information, the type of the information that the network device is about to transmit in the first channel, thereby improving the reliability of information transmission and receiving efficiency.

### BRIEF DESCRIPTION OF DRAWINGS

FIG. 1 is a schematic structural diagram of a communication system according to some embodiments of the present disclosure;
FIG. 2 is a schematic structural diagram of another communication system according to some embodiments of the present disclosure;
FIG. 3 is a schematic structural diagram of another communication system according to some embodiments of the present disclosure;
FIG. 4 is a schematic flowchart of a method for wireless communication according to some embodiments of the present disclosure;
FIG. 5 is a schematic diagram of time-domain positions of a first channel and a second channel according to some embodiments of the present disclosure;
FIG. 6 is a schematic flowchart of a method for wireless communication according to some embodiments of the present disclosure;
FIG. 7 is a schematic block diagram of an apparatus for wireless communication according to some embodiments of the present disclosure;
FIG. 8 is a schematic block diagram of an apparatus for wireless communication according to some embodiments of the present disclosure;
FIG. 9 is a schematic structural diagram of a terminal device according to some embodiments of the present disclosure; and
FIG. 10 is a schematic structural diagram of a network device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenario described in the embodiments of the present disclosure are intended to describe the technical solutions according to the embodiments of the present disclosure more clearly, and are not intend to limit the technical solutions according to the embodiments of the present disclosure. Those of ordinary skill in the art may understand that, with the evolution of the network architecture and emergence of new service scenarios, the technical solutions according to the embodiments of the present disclosure are also applicable to similar technical problems.

The technical solutions according to the embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, a 6^{th} generation (6G) system, or another communication system.

Generally, a conventional communication system supports a limited quantity of connections and is easy to implement. However, with development of communication technologies, a mobile communication system supports not only conventional communications modes, but also other communications modes, such as device-to-device (D2D) communications, machine-to-machine (M2M) communications, machine-type communications (MTC), vehicle-to-vehicle (V2V) communications, or vehicle-to-everything (V2X) communications. The embodiments of the present disclosure are also applicable to these communication systems.

The communication system according to the embodiments of the present disclosure may be applicable to a carrier aggregation (CA) scenario, a dual connectivity (DC) scenario, and a standalone (SA) networking scenario.

The communication system according to the embodiments of the present disclosure may be applicable to an unlicensed spectrum. The unlicensed spectrum may also be considered as a shared spectrum. Alternatively, the communication system in the embodiments of the present disclosure may be applicable to a licensed spectrum. The licensed spectrum may also be considered as an unshared spectrum.

The embodiments of the present disclosure are also applicable to NTN systems and terrestrial network (TN) systems. Generally, the NTN provides communication services to terrestrial users using a satellite communication mode. The NTN systems currently include an NR-NTN system and an IoT-NTN system, and may include other future NTN systems.

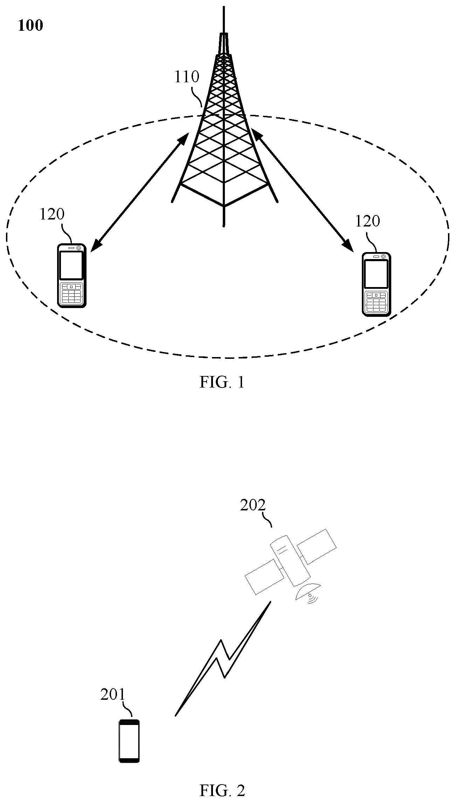

FIG. 1 is a schematic structural diagram of a communication system 100 according to some embodiments of the present disclosure. As illustrated in FIG. 1, the communication system 100 includes a network device 110. The network device is a device capable of communicating with a terminal device 120. The network device 110 provides communication coverage for a specific geographic area and communicates with the terminal devices within the communication coverage.

FIG. 1 illustrates one network device 110 and two terminal devices 120. In some embodiments of the present disclosure, the communication system 100 includes a plurality of network devices, and another number of terminal devices may be deployed within the communication coverage of each of the network devices, which is not limited in the embodiments of the present disclosure.

FIG. 2 is a schematic structural diagram of a communication system according to some embodiments of the present disclosure. Referring to FIG. 2, the communication system includes a terminal device 201 and a satellite 202. The terminal device 201 is in wireless communication with the satellite 202. A network established between the terminal device 201 and the satellite 202 is referred to as an NTN. As illustrated in FIG. 2, the satellite 202 functions as a station, and the terminal device 201 is in direct communication with the satellite 202. In this system, the satellite 202 is referred to as a network device. In some embodiments of the present disclosure, the communication system includes a plurality of satellites 202, and another number of terminal devices may be deployed within the communication coverage of each of the satellites 202, which is not limited in the embodiments of the present disclosure.

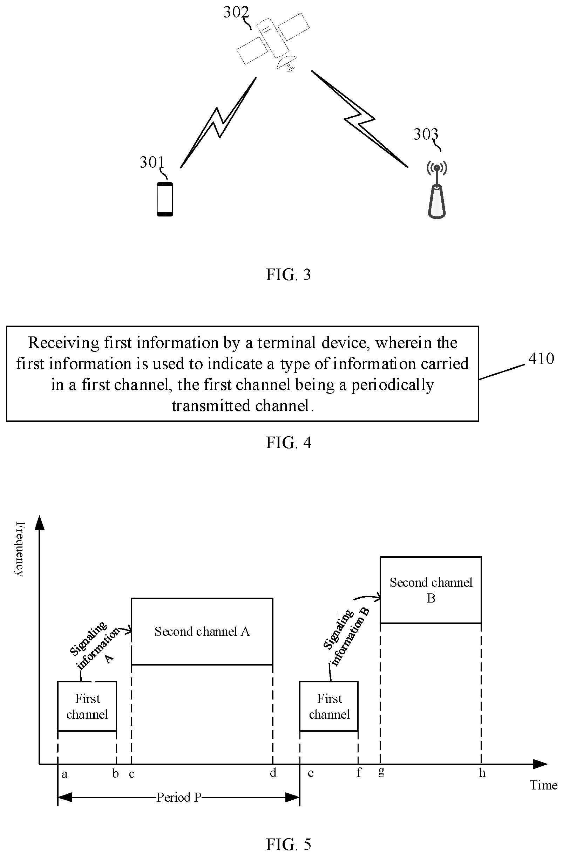

FIG. 3 is a schematic structural diagram of a communication system according to some embodiments of the present disclosure. Referring to FIG. 3, the communication system includes a terminal device 301, a satellite 302, and a station 303. The terminal device 301 is in wireless communication with the satellite 302, and the satellite 302 is in communication with the station 303. A network established between the terminal device 301, the satellite 302, and the station 303 is referred to as an NTN. As illustrated in FIG. 3, the satellite 302 may not function as a station, and the communication between the terminal device 301 and the station 303 needs to be relayed via the satellite 302. In this system, the station 303 is referred to as a network device. In some embodiments of the present disclosure, the communication system includes a plurality of stations 303, each of the stations 303 is in communication with one or more satellites 302. Additionally, another number of terminal devices may be deployed within the communication coverage of each of the satellites 302, which is not limited in the embodiments of the present disclosure.

Beyond 5G (B5G), 6G, and other future evolved communication systems may include a distributed multiple-input multiple-output (MIMO, also referred to as a distributed antenna system) scenario and/or a massive MIMO (also referred to as a massive antenna matrix system) scenario. In some cases, the distributed MIMO and/or massive MIMO also supports a cell-free or user equipment (UE)-centric networking scenario. It should be understood that the above scenarios are also applicable to the TN and/or the NTN.

The terminal device according to the embodiments of the present disclosure may be a UE, an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or processing device connected to a wireless modem, a vehicle-mounted device, a wearable device, a terminal device in a 5G system (5GS), a terminal device in an evolved public land mobile network (PLMN), and the like, which is not limited in the embodiments of the present disclosure. For ease of description, the devices mentioned above are collectively referred to as the terminal device. In the embodiments of the present disclosure, the "terminal device" and the "network device" is interchangeable, and those skilled in the art may understand that the "terminal device" and the "network device" have the same meaning.

The network device according to the embodiments of the present disclosure may be an access network device, which may be disposed on the ground or in a satellite. The access network device is a device deployed in an access network to provide a wireless communication function for the terminal device. The access network device may include various forms of a macro station, a micro station, a relay station, an access point, and the like. In systems employing different radio access technologies, devices with a function of the access network device may have different names, such as gNodeB or gNB in a 5G NR system. The term "access network device" may vary with the evolution of communication technologies. For ease of description, in the embodiments of the present disclosure, the above apparatuses providing the wireless communication function for the terminal device are collectively referred to as the access network device. In some embodiments, a communication may be established between the terminal device and the core network device.

The "5G NR system" in the embodiments of the present disclosure may also be referred to as a 5G system or an NR system, but those skilled in the art may understand its meaning. The technical solutions described in the embodiments of the present disclosure may be applied to LTE systems, as well as to 5G NR systems, and to subsequent evolution systems of 5G NR systems (such as B5G systems, 6G systems), and may also be applied to other communication systems such as a narrowband Internet of things (NB-IoT) system. The present disclosure does not limit this.

In the embodiments of the present disclosure, the network device provides services for a cell. The terminal device is in communication with the network device over a transmission resource (for example, a frequency-domain resource or a spectrum resource) on a carrier used by the cell. The cell may be a cell corresponding to the network device (for example, the station). The cell may belong to a macro station or a station corresponding to a small cell. The small cell herein may include a metro cell, a micro cell, a pico cell, a femto cell, and the like. These small cells have characteristics of small coverage and low transmit power, and are applicable to providing high-rate data transmission services.

For downlink data transmission, the communication system usually supports dynamic scheduling and semi-persistent scheduling.

### Dynamic scheduling

Dynamic scheduling refers to a scheme by which the network device schedules a downlink data transmission via downlink control signaling (downlink control information, DCI). The terminal device receives the downlink control signaling from the network device and subsequently receives downlink data based on a parameter of the downlink control signaling. The advantage of dynamic scheduling lies in the fact that the scheduler determines the transmission parameter based on real-time traffic volume and physical channel conditions, thereby achieving high transmission efficiency. The terminal device first receives the downlink control signaling. Subsequently, based on the parameter indicated in the downlink control signaling, the terminal device receives a downlink data channel or transmits an uplink data channel. However, the terminal device performs blind detection on the downlink control signaling, increasing reception complexity. Additionally, the processing delay of the terminal devices includes a delay of demodulating the downlink control signaling and a delay of demodulating the downlink data.

### Semi-persistent scheduling (SPS)

Semi-persistent scheduling refers to a scheme by which the network device schedules downlink data transmission via higher-layer signaling, for example, radio resource control (RRC) signaling. The terminal device receives the higher-layer signaling for example, RRC signaling, from the network device and receives downlink data based on a parameter of the higher-layer signaling. In cases where data arrives periodically with a constant traffic volume and where the transmission conditions are stable (e.g., the terminal device does not move rapidly), using semi-persistent scheduling may reduce the overhead of downlink control signaling in the system and simplify the reception processing of terminal devices.

With the development of communication technologies, for example, in some applications of 6G URLLC, the data exhibits a relatively explicit characteristic of periodic arrival. However, the volume of data transmitted in a single transmission is large, or the dynamic range of data volume is wide (i.e., the amount of data to be transmitted varies greatly across different periods), or the transmission channel changes significantly. For this type of application, in a case where the existing semi-persistent scheduling is used, due to the semi-static configuration of the transmission parameter, the configuration tends to be conservative to ensure transmission performance in the worst case, resulting in low transmission efficiency. Furthermore, in a case where the existing dynamic scheduling is used, the terminal device needs to receive the downlink control signaling prior to receiving the downlink data, which cannot further reduce latency. Moreover, the existing dynamic scheduling does not fully utilize the periodic characteristics of the service, and still requires the terminal device to perform blind detection of the downlink control channel, wasting terminal power consumption.

Therefore, the present disclosure provides a solution to this issue. For a periodically transmitted first channel, a type of information carried in the first channel is indicated by transmitting first information to the terminal device, such that the network device may flexibly determine, based on current transmission service characteristics, channel conditions, and other information, the type of the information transmitted in the first channel. Furthermore, the network device informs the terminal device of the type of the information carried in the first channel via the first information, such that the terminal device determines, based on the first information, the type of the information that the network device is about to transmit in the first channel, thereby improving the reliability of the information transmission and the receiving efficiency.

FIG. 4 is a schematic flowchart of a method for wireless communication according to some embodiments of the present disclosure. The method may include the following step.

In 410, a terminal device receives first information, wherein the first information is used to indicate a type of information carried in a first channel, the first channel being a periodically transmitted channel.

In some embodiments, the first information is transmitted by a network device. For example, the network device transmits the first information; and correspondingly, the terminal device receives the first information. For example, the network device transmits the first information to the terminal device; and correspondingly, the terminal device receives the first information from the network device.

In some embodiments, the first channel is a periodically transmitted channel. That is, the channel is transmitted at regular intervals. For example, in a case where the period is 1 second, the first channel is transmitted once every 1 second. Alternatively, in a case where the period is 2 slots, the first channel is transmitted once every 2 slots. The present disclosure does not impose any limitations on the transmission period of the first channel.

In some embodiments, the first channel may be a control channel or a data channel. For example, the first channel may be a control channel used for downlink transmission, such as a physical downlink control channel (PDCCH). Alternatively, the first channel may also be a data channel used for downlink transmission, such as a physical downlink shared channel (PDSCH). With the evolution of communication technology, the control channel or the data channel may also have other names, which is not limited in the present disclosure.

In some embodiments, information may be categorized into two types: data information and signaling information. The data information may be represented in the form of transport blocks (TBs), protocol data units (PDUs), or the like. The signaling information may be represented in the form of DCI, configuration information, grant information, allocation information, or the like. In comparison to the data information, the signaling information includes a smaller number of bits.

In the embodiments of the present disclosure, for the periodically transmitted first channel, the network device may flexibly select the type of the information transmitted in the first channel based on information such as the current transmission service characteristics and channel conditions. For example, in a case where the channel conditions change little and the data volume remains constant, the periodic first channel is used to transmit the data information. For another example, in a case where the channel conditions change significantly or the data volume changes significantly, the periodic first channel is used to transmit the signaling information. Furthermore, the network device informs the terminal device of the type of the information carried in the first channel via the first information, such that the terminal device determines, based on this first information, the type of the information that the network device is about to transmit in the first channel, thereby improving the reliability of information transmission, and the receiving efficiency.

In some embodiments, the first information is used to indicate the type of the information carried in the first channel, and the type of the information includes at least one of data information or signaling information. The first information may indicate the following three scenarios: (1) the first information is used to indicate that the first channel carries the data information, or the first information is used to indicate that only the data information is carried in the first channel; (2) the first information is used to indicate that the first channel carries the signaling information, or the first information is used to indicate that only the signaling information is carried in the first channel; and (3) the first information is used to indicate that the first channel carries both the data information and the signaling information, or the first information is used to indicate that both the data information and the signaling information are carried in the first channel.

In some embodiments, for the above scenarios (1) and (3), in a case where there is corresponding verification information for the data information, the verification information corresponding to the data information is also carried in the first channel. In some embodiments, for the scenarios (2) and (3), in a case where there is corresponding verification information for the signaling information, the verification information corresponding to the signaling information is also carried in the first channel. In some embodiments, the type of verification information includes one or more of cyclic redundancy check (CRC), error correction code (ECC), checksum, parity check, or the like. The present disclosure does not limit the type of the verification information.

Since the number of bits in the signaling information is smaller compared to the data information, in a case where the content carried in the periodically transmitted first channel only includes the signaling information, only semi-static resource reservation is needed for the signaling information in the communication system, while the data information may be dynamically adjusted according to actual transmission conditions, thereby improving the system efficiency. Additionally, by extending the semi-persistent scheduling transmission mechanism to the signaling information transmission, the terminal device does not need to perform complex blind detection on control signaling, such that the implementation complexity of the terminal device is not increased and power consumption is reduced.

In some embodiments, the first information is used to indicate the type of the information carried in the first channel, and the type of the information includes one of presence of the signaling information or absence of the signaling information. The first information may indicate the following two scenarios: (1) the first information is used to indicate that the information carried in the first channel includes the signaling information; and (2) the first information is used to indicate that the information carried in the first channel does not include the signaling information.

In some embodiments, for scenario (1), the signaling information indicates that the content carried in the first channel includes the signaling information, and may further include the data information or may not include the data information. That is, in a case where the first information indicates that the type of the information carried in the first channel is signaling information, the information carried in the first channel definitely includes the signaling information, but the first information does not explicitly indicate whether the information carried in the first channel further includes the data information.

In some embodiments, for scenario (2), absence of the signaling information indicates that the content carried in the first channel does not include the signaling information, that is, the content carried in the first channel only includes the data information.

In some embodiments, in a case where the first information indicates that the type of the information carried in the first channel is the signaling information, the terminal device determines whether the information carried in the first channel further includes the data information based on the first information. In some embodiments, in a case where the first information includes the parameter of the data information, the terminal device determines that the information carried in the first channel further includes the data information; in a case where the first information does not include the parameter of the data information or lacks some of the parameters of the data information, the terminal device determines that the information carried in the first channel does not include the data information. In some embodiments, the parameter of the data information includes, but is not limited to, at least one of a time-domain resource of the data information, a frequency-domain resource of the data information, a coding level of the data information, hybrid automatic repeat request (HARQ) process information corresponding to data information, or the like.

For the above method, the first information is used to indicate whether the type of the information carried in the first channel is presence of the signaling information or absence of the signaling information. In this way, only two indication results are present, which may save the signaling overhead of the first information.

In some embodiments, the first information is used to indicate the type of the information carried in the first channel, and the type of the information includes one of presence of the data information or absence of the data information. The first information may indicate the following two scenarios: (1) the first information is used to indicate that the information carried in the first channel includes the data information; and (2) the first information is used to indicate that the information carried in the first channel does not include the data information.

In some embodiments, for scenario (1), presence of the data information indicates that the content carried in the first channel includes the data information, and may or may not also include the signaling information. That is, in a case where the first information indicates that the type of the information carried in the first channel is presence of the data information, the information carried in the first channel needs to include the data information. However, the first information does not explicitly indicate whether the information carried in the first channel further includes the signaling information.

In some embodiments, for the scenario (2), absence of the data information indicates that the content carried in the first channel does not include the data information, that is, the content carried in the first channel only includes the signaling information.

In some embodiments, in a case where the first information indicates that the type of the information carried in the first channel is presence of the data information, the terminal device determines, based on the first information, whether the information carried in the first channel further includes the signaling information. In some embodiments, in a case where the first information includes the parameter of the signaling information, the terminal device determines that the information carried in the first channel further includes the signaling information; or in a case where the first information does not include the parameter of the signaling information or lacks some parameters of the signaling information, the terminal device determines that the information carried in the first channel does not include the signaling information. In some embodiments, the parameter of the signaling information include, but are not limited to, at least one of: the type of the signaling information, the coding scheme for the signaling information, the format of the signaling information, and the protocol version number corresponding to the signaling information.

For the above method, the first information is used to indicate whether the type of the information carried in the first channel is presence of the data information or absence of the data information. In this way, only two indication results are present, which may save the signaling overhead of the first information.

For a scenario where the information carried in the first channel includes the signaling information, relevant explanations for the signaling information are provided herein.

In some embodiments, in a case where the information carried in the first channel includes the signaling information, the signaling information is used to indicate a parameter of the second channel. The second channel is another channel different from the first channel.

In some embodiments, the second channel may include a control channel and/or a data channel. The control channel may include the control channel used for the downlink transmission and/or the control channel used for the uplink transmission, and the data channel may include the data channel used for the downlink transmission and/or the data channel used for the uplink transmission. Exemplarily, the second channel includes one or more types of channels: a physical uplink shared channel (PUSCH), a PDSCH, a physical uplink control channel (PUCCH), or a PDCCH. With the evolution of communication technology, the control channel or the data channel may have other names, which is not limited in the present disclosure.

In some embodiments, the time-domain position of the second channel is subsequent to the first channel or not earlier than the first channel. The time domain refers to the domain of time. A time-domain resource of a channel refers to time allocated to the channel for operation within the time domain. The time-domain position of a channel refers to the position of a time interval between the start and end of a signal transmission on that channel in the time domain.

In some embodiments, the expression "the time-domain position of the second channel is subsequent to the time-domain position of the first channel" refers to the start time-domain position of the second channel being subsequent to the start time-domain position of the first channel. In this case, an overlap may be present between the time-domain resource occupied by the second channel and the time-domain resource occupied by the first channel.

In some embodiments, the expression "the time-domain position of the second channel is subsequent to the time-domain position of the first channel" refers to the start time-domain position of the second channel being subsequent to the end time-domain position of the first channel. In this case, the time-domain resources occupied by the second channel definitely do not overlap with the time-domain resource occupied by the first channel.

In some embodiments, the expression "the time-domain position of the second channel is not earlier than the first channel" refers to the start time-domain position of the second channel being not ahead of the time-domain position of the first channel. In this case, an overlap may be present between the time-domain resource occupied by the second channel and the time-domain resource occupied by the first channel.

In some embodiments, the expression "the time-domain position of the second channel is not earlier than the first channel" refers to the start time-domain position of the second channel being not ahead of the end time-domain position of the first channel. In this case, the time-domain resource occupied by the second channel either do not overlap with the time domain-resource occupied by the first channel, or overlap only at the end time-domain position of the first channel in a case where the start time-domain position of the second channel is the same as the end time-domain position of the first channel.

Additionally, since the first channel is a periodically transmitted channel, the above comparison of the time-domain positions of the first and second channels refers to the comparison of the time-domain positions between the first channel carrying the signaling information and the second channel indicated by the signaling information, in the case where the information carried in some first channel includes the signaling information.

FIG. 5 is a schematic diagram of the time-domain position of the first channel and the second channel according to some embodiments of the present disclosure. The parameter of a second channel A is indicated by signaling information A transmitted by the first channel at time-domain positions a to b, and the parameter of a second channel B are indicated by signaling information B transmitted by the first channel at time-domain positions e to f. A start time-domain position of the second channel A is c, and an end time-domain position of the second channel A is d. The start time-domain position of the second channel A is subsequent to an end time-domain position b of the first channel containing the signaling information A. A start time-domain position of the second channel B is g, and an end time-domain position of the second channel B is h. The start time-domain position of the second channel B is subsequent to an end time-domain position f of the first channel containing the signaling information B.

Additionally, the second channel may further include of one or a plurality of channels (a group of channels).

In some embodiments, the second channel includes at least one of at least one downlink channel, at least one uplink channel. In some embodiments, the channels included in the second channel fall into three categories:
(1) The second channel includes at least one downlink channel.
(2) The second channel includes at least one uplink channel.
(3) The second channel includes at least one downlink channel and at least one uplink channel.

The downlink channel may be either a control channel (e.g., PDCCH) or a data channel (e.g., PDSCH) used for downlink transmission; the uplink channel may be either a control channel (e.g., PUCCH) or a data channel (e.g., PUSCH) used for uplink transmission.

In this way, the above scheme may schedule the uplink transmission and/or the downlink transmission using the control information carried in the first channel transmitted periodically. The specific channel type and quantity indicated may be determined according to actual transmission requirements, which is not limited in the present disclosure.

In some embodiments, the parameter of the second channel include at least one of frequency-domain resource information of the second channel, time-domain resource information of the second channel, modulation and coding information corresponding to the second channel, HARQ process information corresponding to the second channel, redundancy version information corresponding to the second channel, precoding-related information corresponding to the second channel, reference signal information corresponding to the second channel, power control information corresponding to the second channel, transmission resource information of feedback information corresponding to the second channel, or priority information of the second channel.

The frequency-domain resource information of the second channel is used to indicate the frequency-domain resource allocated to the second channel. The frequency-domain resource may be a frequency range, a frequency band, a subcarrier, a bandwidth part (BWP), a grid, a bandwidth, a resource block (RB), a resource block group (RBG), or the like.

The time-domain resource information of the second channel is used to indicate the time-domain resource allocated to the second channel. The time-domain resource may be a frame, a subframe, a slot, a sub-slot, a symbol, a cyclic prefix (CP), a period, and the like.

The modulation and coding information corresponding to the second channel is used to indicate the method of modulation and coding for information transmission on the second channel. Methods for modulation include, but are not limited to, an amplitude modulation, a frequency modulation, a phase modulation, and the like. Methods for coding include, but are not limited to, forward error correction coding, interleaving coding, multiple access codes, and the like, which is not limited in the present disclosure.

The HARQ process information corresponding to the second channel is used to indicate the number, status, and other information of the HARQ process corresponding to the information transmitted on the second channel.

Redundancy version (RV) information corresponding to the second channel is used to indicate an RV corresponding to the second channel. The RV is designed to implement incremental redundancy (IR) HARQ transmission, which divides redundant bits generated by an encoder into several groups. Each RV defines a transmission start point, and different RVs are used for an initial transmission and each HARQ retransmission, respectively, to achieve a gradual accumulation of the redundant bits and complete the incremental redundancy HARQ operation.

The precoding-related information corresponding to the second channel is used to indicate the precoding method for the information transmitted on the second channel. The precoding scheme includes, but is not limited to, at least one of linear precoding, nonlinear precoding, codebook-based precoding, non-codebook-based precoding, or the like.

The reference signal information corresponding to the second channel is used to indicate the relevant information of the reference signal corresponding to the second channel. The reference signal is a known signal from the transmitter to the receiver for a channel estimation or a channel detection, and is divided into an uplink reference signal and a downlink reference signal.

The power control information corresponding to the second channel is used to indicate the power when transmitting information on the second channel. The power control information may include open-loop power control information and/or closed-loop power control information.

The transmission resource information of the feedback information corresponding to the second channel is used to indicate a transmission resource occupied by the HARQ feedback information corresponding to the second channel.

The priority information of the second channel is used to indicate the priority among the several channels.

Based on the parameter of the second channel indicated by the received control information, the terminal device may receive signals on the second channel, thereby improving the reliability and success rate of reception of the second channel.

In some embodiments, the signaling information includes the parameter of the second channel. That is, the signaling information directly indicates the parameter of the second channel. The terminal device may directly acquire the parameter of the second channel from the signaling information. This offers great flexibility for indicating the parameter of the second channel.

In some embodiments, the signaling information includes an offset or differential value of the parameters of the second channel. The terminal device acquires the offset or differential value of the parameter of the second channel from the signaling information, and combines the offset or differential value of the parameter of the second channel with a predetermined reference configuration to determine the parameter of the second channel. In some embodiments, the reference configuration is indicated by at least one of information: first information, and other information excluding the first information. The other information excluding the first information may be a higher-layer signaling or downlink control information. For example, in a case where the signaling information indicates that the modulation and coding level corresponding to the second channel is an offset value Δ, and the reference modulation and coding level of the second channel is A, the modulation and coding level of the second channel is A+Δ. In this way, the signaling information only needs to include the offset or differential value of the parameter of the second channel, resulting in a smaller bit overhead of the signaling information.

In some embodiments, at least one piece of signaling information may be carried in the first channel, and each piece of signaling information is used to indicate the parameter of one or more second channels. Exemplarily, each piece of signaling information is used to indicate the parameter of the one or more second channels. For example, in a case where the one or more second channels have a periodicity, the parameter of the multiple second channels may be multiplexed and transmitted in the same piece of signaling information. By multiplexing the parameter of multiple second channels in the same piece of signaling information for transmission, the above scheme helps reduce signaling overhead, improves system efficiency, and reduces the number of detections by terminal devices, thereby reducing the power consumption of terminal devices.

In some embodiments, in a case where a plurality of pieces of signaling information are carried in the first channel, the plurality of pieces of signaling information are independently encoded. In a case where the plurality of pieces of signaling information are independently encoded, the encoded signaling information are mapped to the first channel for transmission via concatenation or other methods. Due to different reliability requirements for different signaling information, independent coding is conducive to improving efficiency. However, the overhead of signaling information is increased in a case where each piece of signaling information introduces an independent check code.

In some embodiments, in a case where the plurality of pieces of signaling information are carried in the first channel, the plurality of pieces of signaling information are jointly encoded. In a case where the plurality of pieces of signaling information are jointly encoded, the jointly encoded signaling information is mapped to the first channel for transmission. The methods of joint coding include, but are not limited to, time-domain joint coding, frequency-domain joint coding, spatial-domain joint coding, concatenated coding, and other coding schemes. By jointly coding the plurality of pieces of signaling information, the overhead of check codes is reduced, thereby lowering the total overhead. However, in a case where some bits are corrupted during transmission, all signaling information may fail to be received normally.

In some embodiments, in a case where the information carried in the first channel includes the signaling information, the first information is also used to indicate at least one of a format of signaling, content of the signaling, a bit size of the signaling information, a modulation and coding level corresponding to the signaling information, or a coding rate corresponding to the signaling information.

The signaling format is used to indicate the ordering and structure of signaling information and is specified by communication technologies and protocols. The signaling content refers to the information within the signaling information used to control and manage the communication process, such as information for establishing connections, information for releasing connections, network configuration information, protocol information, and the like. The bit size corresponding to the signaling is used to indicate a length of the signaling information, that is, a number of bits the signaling information occupies. The modulation and coding level corresponding to the signaling is used to indicate the modulation and coding scheme (MCS) corresponding to the signaling information. The coding rate corresponding to signaling is used to indicate the bit rate adopted for transmitting signaling information, and different signaling may adopt different coding rates.

By explicitly indicating relevant information to the signaling information, the complexity for blind detection is reduced.

In some embodiments, in a case where the information carried in the first channel includes signaling information, the coding scheme for the signaling information is determined based on protocol-defined information, or is indicated by the first information.

In some embodiments, the protocol-defined information is used to specify the coding scheme for the signaling information. In some embodiments, the protocol-defined information is also used to specify the bit size constraints of the signaling information. The bit size constraints of the signaling information may include: the bit size of signaling information is greater than or equal to a first value and/or less than or equal to a second value.

In some embodiments, in a case where the bit size of the valid information in the signaling information is less than the first value, padding information is added to the signaling information such that the bit size of the signaling information upon adding the padding information equals the first numerical value, thereby satisfying the above condition. Padding information refers to fields or values in the signaling information that do not carry useful information, and may be represented by at least one of a zero value, a special flag bit, or the like. Exemplarily, in a case where the first numerical value is 4 and the bit size of the valid information in the signaling information is 2 bits, padding information with 4 - 2 = 2 bits is added to the signaling information, resulting in a bit size of 4 bits for the signaling information, which equals the first numerical value.

In some embodiments, in a case where the bit size of the valid information in the signaling information is greater than a second value, the signaling information is divided into at least two parts, each part satisfying the above bit size conditions, and each part is independently encoded. Following the independent coding, all parts are carried together in the first channel for transmission. In some embodiments, in a case where the bit size of one of the at least two parts is less than the first value, placeholder information may be added to that part to meet the above conditions. For example, in a case where the first value is 2 and the second value is 11, and the bit size of the valid information in the signaling information is 13 bits, the signaling information is divided into $\left⌈13/11\right⌉ = 2$ two parts, with the bit sizes of the information in each part being $\left⌈13/2\right⌉ = 7$ bits and $\left⌊13/2\right⌋ = 6$ bits respectively.

In this way, signaling information is encoded using a fixed coding approach, which is relatively simple to implement. However, the overhead of signaling information may be increased due to the inclusion of placeholder information, thereby reducing system efficiency.

In some embodiments, the protocol-defined information is used to specify a correspondence between the bit size of the signaling information and the coding scheme for the signaling information, and the coding scheme for the signaling information is determined based on the bit size of signaling information and the correspondence.

In some embodiments, the correspondence is determined based on a bit size interval. A plurality of bit size intervals are set, and each bit size interval is associated with a corresponding coding scheme. Optionally, different bit size intervals may correspond to different coding schemes. The coding schemes for signaling information include, but are not limited to, the following: repetition coding, block coding, Reed-Muller (RM) coding, polar codes, low-density parity-check (LDPC) codes, convolutional codes, Turbo codes, and the like.

Exemplarily, in a case where the bit size of the signaling information falls within a first bit size interval, a first coding scheme is used; in a case where the bit size of signaling information falls within a second bit size interval, a second coding scheme is used. Notably, the first and second bit size intervals are different, and the first and second coding schemes are different. There may be a plurality of bit size intervals, and different intervals may correspond to different coding schemes or the same coding scheme.

Exemplarily, in a case where the bit size of the signaling information is less than or equal to 2, the signaling information uses a repetition coding scheme; in a case where the bit size of signaling information is greater than 2 and less than or equal to 11, the signaling information uses a block coding scheme or a rate-matching (RM) coding scheme; in a case where the bit size of signaling information is greater than 12 and less than or equal to 140, the signaling information adopts a polar coding scheme; or in a case where the bit size of signaling information exceeds 140, the signaling information uses an LDPC coding scheme.

Exemplarily, in a case where the bit size of the signaling information is less than or equal to 2, the signaling information uses the repetition coding scheme; in a case where the bit size of signaling information is greater than 2 and less than or equal to 11, the signaling information uses the block coding scheme or the RM coding scheme; in a case where the bit size of the signaling information is greater than 12 and less than or equal to 140, the signaling information uses a first polar coding scheme; in a case where the bit size of the signaling information is greater than 140 and less than or equal to 1706, the signaling information uses a second polar coding scheme; or in a case where the bit size of signaling information is greater than 1706, the signaling information uses the LDPC coding scheme.

The coding schemes corresponding to different intervals may be configured according to the requirements of information transmission, and is not limited in the present disclosure.

By configuring different coding schemes for signaling information with varying bit sizes, coding gains may be maximized.

In some embodiments, in a case where the information carried in the first channel includes both the signaling information and the data information, the signaling information and data information are independently encoded. In some embodiments, the independently encoded signaling information and independently encoded data information are concatenated and mapped onto the first channel for transmission. In this way, independent coding allows the data information and signaling information to meet their respective reliability requirements, thereby improving system efficiency.

In some embodiments, the transmission resource of the first channel is indicated by the first information. The transmission resource of the first channel refers to the resource used for transmitting information in the first channel, and includes one or more resources: a time-domain resource, a frequency-domain resource, a spatial-domain resource, a code-domain resource, and the like.

In some embodiments, in a case where the information carried in the first channel includes both the signaling information and the data information, the first channel occupies the first resource, a second resource occupied by the signaling information in the first resource is determined according to a predefined rule, and a third resource occupied by the data information is the remaining resource in the first resource excluding the second resource. The first resource occupied by the first channel may be pre-configured or indicated by the first information or other information.

In some embodiments, in a case where the information carried in the first channel includes both the signaling information and the data information, the first channel occupies the first resource, and the third resource occupied by the data information within the first resource is determined according to a predefined rule. The second resource occupied by the signaling information is the remaining resource in the first resource excluding the third resource. The first resource occupied by the first channel may be pre-configured or indicated by the first information or other information.

In some embodiments, the predefined rule may be indicated by the first information or defined in the protocol, which is not limited in the present disclosure.

In this way, determining the resources occupied by the first channel, the data information, and the signaling information may reduce the overhead associated with configuring the first channel.

In some embodiments, the predefined rule is associated with at least one of coding rate information of the signaling information, a resource occupation ratio of the signaling information, a maximum amount of resource occupation of the signaling information, a priority of the signaling information, coding rate information of the data information, a resource occupation ratio of the data information, a maximum amount of resource occupation of the data information, or a priority of the data information.

The coding rate information of the signaling information is used to indicate a bit rate upon transmitting the signaling information. The resource occupation ratio of signaling information refers to a proportion of resource occupied by signaling information in the first resource of the first channel. The maximum amount of resource occupation of the signaling information refers to a maximum quantity of resources occupied by the signaling information in the first resource of the first channel. The priority of the signaling information is used to indicate the importance or urgency for transmitting the signaling information in the first channel. The coding rate information of the data information is used to indicate the bit rate upon transmitting the data information. The resource occupation ratio of the data information refers to the proportion of resources occupied by data information in the first resource of the first channel. The maximum amount of resource occupation of the data information refers to a maximum quantity of resources occupied by the data information in the first resource of the first channel. The priority of the data information is used to indicate the importance or urgency of transmitting the data information in the first channel.

In this way, based on the predefined rule and relevant factors such as signaling information and data information, the resources allocated to the first channel are used to reasonably allocate the resource occupied by signaling information and the resource occupied by data information.

In some embodiments, in a case where the information carried in the first channel includes both signaling information and data information, the second resource occupied by the signaling information and the third resources occupied by the data information are configured or indicated through the first information or other information. The first resources occupied by the first channel are equal to the second resource occupied by the signaling information plus the third resources occupied by the data information. In this way, precise configuration is achieved, thereby improving the utilization rate of the channel.

In some embodiments, the second resource occupied by signaling information include one of at least one time-domain symbol, at least one frequency-domain resource unit, or at least one resource element (RE).

Time-domain symbols refer to the basic time units used for transmitting information, which may be orthogonal frequency-division multiplexing (OFDM) symbols or other symbols. Exemplarily, data information and signaling information are transmitted in the first channel using time-division multiplexing, occupying different time-domain symbols.

The frequency-domain resource unit refers to the basic unit used for allocating and managing spectrum resources. Exemplarily, in the 5G NR system, the entire spectrum is divided into multiple frequency-domain resource units, with each corresponding to a subcarrier or resource block. For example, signaling information and data information are transmitted in the first channel using frequency division multiplexing, occupying different frequency-domain units.

A resource element is the smallest resource unit of physical resources used for channel transmission. Exemplarily, a resource element is represented by one symbol in the time domain and one subcarrier in the frequency domain.

In some embodiments, the first channel is a downlink channel, which means that the first channel is a periodically transmitted downlink channel. In some embodiments, the first channel is a PDSCH, which means that the first channel is a periodically transmitted PDSCH. A periodically transmitted downlink channel refers to a downlink channel that transmits information at certain time intervals. In some embodiments, the downlink periodically transmitted channel may be a semi-persistent scheduling physical downlink shared control channel (SPS PDSCH), or may be another downlink channel suitable for periodic transmission.

In some embodiments, the first information includes at least one of higher-layer signaling, downlink control signaling, and activation signaling.

In some embodiments, some parameters corresponding to semi-persistent downlink transmission are configured by higher-layer signaling, and the downlink control signaling configures the activation of the semi-persistent downlink transmission. The downlink control information may also include some parameters.

Exemplarily, in a higher-layer signaling SPS-Config used for configuring the semi-persistent downlink transmission, an information element (IE) is defined to indicate the information carried in the channel of the semi-persistent downlink transmission. The IE is used to indicate the type of the information carried in the channel of the semi-persistent downlink transmission, and includes three indication results: presence of the data information, presence of the signaling information, and presence of both the data information and the signaling information. For further details, reference may be made to the above embodiments.

Exemplarily, in the higher-layer signaling SPS-Config used for configuring the semi-persistent downlink transmission, the IE is set to indicate the information carried in the channel of the semi-persistent downlink transmission. The IE is used to indicate the type of the information carried in the channel for semi-persistent downlink transmission, and includes two indication results: presence of the signaling information and absence of signaling information. For further details, reference may be made to the above embodiments.

Exemplarily, in the higher-layer signaling SPS-Config used for configuring the semi-persistent downlink transmission, an IE is defined to indicate the information carried in the channel of the semi-persistent downlink transmission. The IE is used to indicate the type of the information carried in the channel for semi-persistent downlink transmission, and includes two indication results: presence of the data information and absence of the data information. For further details, reference may be made to the above embodiments.

Exemplarily, in the higher-layer signaling SPS-Config used for configuring the semi-persistent downlink transmission, some parameters of the channel for configuring the semi-persistent downlink transmission are set. The terminal device receives the downlink control signaling, which is used to enable the semi-persistent downlink transmission. The downlink control signaling contains information indicating the type of the information carried in the channel of the semi-persistent downlink transmission. The downlink control signaling includes three types of indication results: presence of the data information, presence of the signaling information, and presence of both the data information and the signaling information. For further details, reference may be made to the above embodiments.

Exemplarily, in the higher-layer signaling SPS-Config used for configuring the semi-persistent downlink transmission, some parameters of the channel for configuring the semi-persistent downlink transmission are set. The terminal device receives downlink control signaling, which is used to enable the semi-persistent downlink transmission. The downlink control signaling contains information indicating the type of the information carried in the channel for semi-persistent downlink transmission. The downlink control signaling includes two indication results: presence of the signaling information and absence of the signaling information. For further details, reference may be made to the above embodiments.

Exemplarily, in the higher-layer signaling SPS-Config used for configuring the semi-persistent downlink transmission, some parameters of the channel for configuring the semi-persistent downlink transmission are set. The terminal device receives downlink control signaling, which is used to enable the semi-persistent downlink transmission. The downlink control signaling contains information indicating the type of the information carried in the channel for semi-persistent downlink transmission. The downlink control signaling includes two indication results: presence of the data information and absence of the data information. For further details, reference may be made to the above embodiments.

In the technical solutions according to the embodiments of the present disclosure, for a periodically transmitted first channel, a type of information carried in the first channel is indicated by transmitting first information to the terminal device. This enables the network device to flexibly determine, based on information such as current transmission service characteristics and channel conditions, the type of the information to be transmitted using the first channel. Furthermore, the network device informs the terminal device of the type of the information carried in the first channel via the first information, such that the terminal device is allowed to determine, based on the first information, the type of the information that the network device is about to transmit in the first channel, thereby improving the reliability of information transmission and the receiving efficiency.

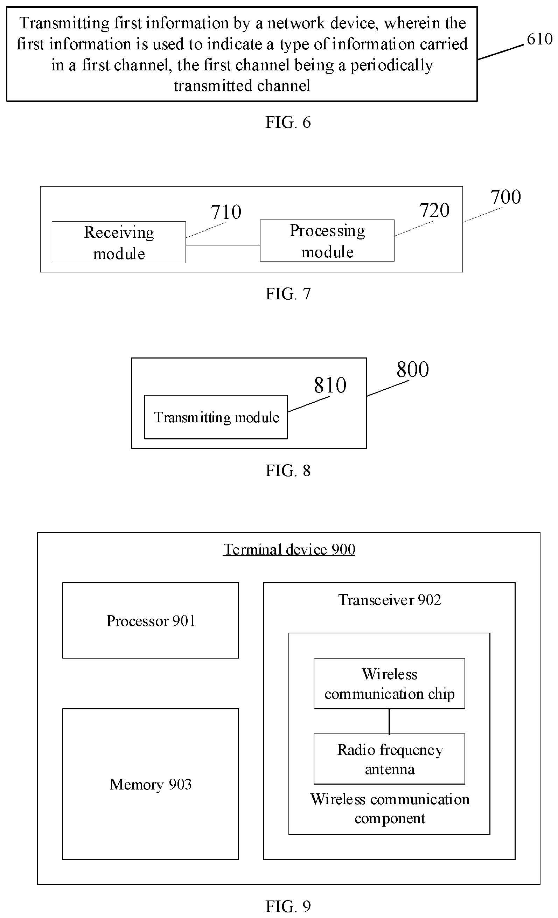

FIG. 6 is a schematic flowchart of a method for wireless communication according to some embodiments of the present disclosure. The method may be performed by a network device, and includes the following step.

In 610, the network device transmits first information, wherein the first information is used to indicate the type of the information carried in the first channel, the first channel being a periodically transmitted channel.

In some embodiments, the first information is used to indicate that the type of the information carried in the first channel includes at least one of data information or signaling information.

In some embodiments, the first information is used to indicate that the type of the information carried in the first channel includes one of presence of the signaling information or absence of the signaling information. In some embodiments, in a case where the type of the information is signaling information, whether the information carried in the first channel further includes data information is determined based on the first information.

In some embodiments, the first information is used to indicate that the type of the information carried in the first channel includes one of presence of the data information or absence of the data information. In some embodiments, in a case where the type of the information is data information, whether the information carried in the first channel further includes signaling information is determined based on the first information.

In some embodiments, in a case where the information carried in the first channel includes signaling information, the signaling information is used to indicate a parameter of the second channel.

In some embodiments, the time-domain position of the second channel is subsequent to the first channel or not earlier than the first channel.

In some embodiments, the second channel includes at least one of at least one downlink channel or at least one uplink channel.

In some embodiments, the parameter of the second channel includes at least one of frequency-domain resource information of the second channel, time-domain resource information of the second channel, modulation and coding information corresponding to the second channel, HARQ process information corresponding to the second channel, redundancy version information corresponding to the second channel, precoding-related information corresponding to the second channel, reference signal information corresponding to the second channel, power control information corresponding to the second channel, transmission resource information of feedback information corresponding to the second channel, or priority information of the second channel.

In some embodiments, in a case where the information carried in the first channel includes signaling information, the signaling information includes the parameter of the second channel or an offset or differential value of the parameter of the second channel.

In some embodiments, in a case where a plurality of pieces of signaling information are carried in the first channel, these pieces of signaling information are either independently encoded or jointly.

In some embodiments, in a case where the information carried in the first channel includes signaling information, the first information is also used to indicate at least one of a format of signaling, content of the signaling, a bit size of the signaling information, a modulation and coding level corresponding to the signaling information, or a coding rate corresponding to the signaling information.

In some embodiments, in a case where the information carried in the first channel includes signaling information, the coding scheme for the signaling information is determined based on protocol-defined information, or is indicated by the first information.

In some embodiments, the protocol-defined information is used to specify the coding scheme for signaling information; alternatively, the protocol-defined information is used to specify the correspondence between the bit size of signaling information and the coding scheme for signaling information, and the coding scheme for signaling information is determined based on the bit size of signaling information and this correspondence.

In some embodiments, in a case where the information carried in the first channel includes both signaling information and data information, the signaling information and data information are independently encoded.

In some embodiments, the transmission resources of the first channel are indicated by the first information.

In some embodiments, in a case where the information carried in the first channel includes both signaling information and data information, the first channel occupies the first resource, and the second resource occupied by the signaling information in the first resource is determined according to a predefined rule. The third resource occupied by the data information is the remaining resource in the first resource excluding the second resource; alternatively, the first channel occupies the first resource, and the third resource occupied by the data information in the first resource is determined according to a predefined rule, and the second resource occupied by the signaling information is the remaining resource in the first resource excluding the third resource.

In some embodiments, the predefined rule is associated with at least one of coding rate information of the signaling information, a resource occupation ratio of the signaling information, a maximum amount of resource occupation of the signaling information, a priority of the signaling information, coding rate information of the data information, a resource occupation ratio of the data information, a maximum amount of resource occupation of the data information, or a priority of the data information.

In some embodiments, the second resource occupied by signaling information includes at least one time-domain symbol, at least one frequency-domain resource unit, or at least one resource element.

In some embodiments, the first channel is a periodically transmitted downlink channel.

In some embodiments, the first information includes at least one of higher-layer signaling, downlink control signaling, or activation signaling.

For details not disclosed in the embodiments illustrating the methods at the network device, reference may be made to the above embodiments illustrating the methods at the terminal device.

In the technical solutions according to the embodiments of the present disclosure, for a periodically transmitted first channel, a type of information carried in the first channel is indicated by transmitting first information via a network device. This enables the network device to flexibly determine, based on information such as the current transmission service characteristics and channel conditions, the type of the information to be transmitted using the first channel. Furthermore, the network device informs the terminal device of the type of the information carried in the first channel via the first information, such that the terminal device is allowed to determine, based on the first information, the type of the information that the network device is about to transmit in the first channel, thereby improving the reliability of information transmission and the receiving efficiency.

The following are the apparatus embodiments of the present disclosure, which may be used to implement the method embodiments of the present disclosure. For details not disclosed not disclosed in the apparatus embodiments, reference may be made to the above method embodiments of the present disclosure.

FIG. 7 is a block diagram of a wireless communication apparatus according to some embodiments of the present disclosure. The apparatus has a function to perform the above method embodiments on the terminal device. The function may be implemented either via hardware or by executing corresponding software on hardware. The apparatus may be the above terminal device, or the communication apparatus may be integrated into the terminal device. As illustrated in FIG. 7, the apparatus 700 may include a receiving module 710.

The receiving module 710 is configured to receive first information, wherein the first information is used to indicate a type of information carried in a first channel, the first channel being a periodically transmitted channel.

In some embodiments, the type of the information includes at least one of data information or signaling information.

In some embodiments, the type of the information includes one of presence of the signaling information or absence of the signaling information.

In some embodiments, as illustrated in FIG. 7, the apparatus further includes a processing module 720, configured to determine, based on the first information, whether the information carried in the first channel further includes the data information in a case where the type of the information is presence of the signaling information.

In some embodiments, the type of the information includes one of presence of the data information or absence of the data information.

In some embodiments, as illustrated in FIG. 7, the apparatus further includes a processing module 720, configured to determine, based on the first information, whether the information carried in the first channel further includes the signaling information in a case where the type of the information is presence of the data information.

In some embodiments, in a case where the information carried in the first channel includes the signaling information, the signaling information is used to indicate a parameter of the second channel.

In some embodiments, a time-domain position of the second channel is subsequent to the first channel or not earlier than the first channel.

In some embodiments, the second channel includes at least one of at least one downlink channel or at least one uplink channel.

In some embodiments, the parameter of the second channel includes at least one of frequency-domain resource information of the second channel, time-domain resource information of the second channel, modulation and coding information corresponding to the second channel, HARQ process information corresponding to the second channel, redundancy version information corresponding to the second channel, precoding-related information corresponding to the second channel, reference signal information corresponding to the second channel, power control information corresponding to the second channel, transmission resource information of feedback information corresponding to the second channel, or priority information of the second channel.

In some embodiments, the signaling information includes a parameter of the second channel, or an offset or differential value of the parameter of the second channel.

In some embodiments, in a case where the plurality of pieces of signaling information are carried in the first channel, the plurality of pieces of signaling information are independently encoded, or the plurality of pieces of signaling information are encoded jointly.

In some embodiments, in a case where the information carried in the first channel includes signaling information, the first information is further used to indicate at least one of a format of signaling, content of the signaling, a bit size of the signaling information, a modulation and coding level corresponding to the signaling information, or a coding rate corresponding to the signaling information.

In some embodiments, in a case where the information carried in the first channel includes signaling information, the coding scheme for the signaling information is determined based on protocol-defined information, or is indicated by the first information.

In some embodiments, the protocol-defined information is used to specify the coding scheme for the signaling information; alternatively, the protocol-defined information is used to specify the correspondence between the bit size of the signaling information and the coding scheme for the signaling information, and the coding scheme for the signaling information is determined based on the bit size of the signaling information and the correspondence.

In some embodiments, in a case where the information carried in the first channel includes both signaling information and data information, the signaling information and the data information are independently encoded.

In some embodiments, the transmission resources of the first channel are indicated by the first information.

In some embodiments, in a case where the information carried in the first channel includes both signaling information and data information, the first channel occupies a first resource, a second resource occupied by the signaling information in the first resource is determined according to a predefined rule, and a third resource occupied by the data information is the remaining resource in the first resource excluding the second resource; or the first channel occupies a first resource, a third resource occupied by the data information in the first resource is determined according to a predefined rule, and a second resource occupied by the signaling information is the remaining resource in the first resource excluding the third resource.

In some embodiments, the predefined rule is associated with at least one of coding rate information of the signaling information, a resource occupation ratio of the signaling information, a maximum amount of resource occupation of the signaling information, a priority of the signaling information, coding rate information of the data information, a resource occupation ratio of the data information, a maximum amount of resource occupation of the data information, or a priority of the data information.

In some embodiments, the second resource occupied by the signaling information include one of at least one time-domain symbol, at least one frequency-domain resource unit, or at least one resource element.

In some embodiments, the first channel is a downlink channel; or the first channel is a PDSCH.

In some embodiments, the first information includes at least one of higher-layer signaling, downlink control signaling, or activation signaling.

FIG. 8 is a block diagram of a wireless communication apparatus according to some embodiments of the present disclosure. The apparatus has the function implementing the above method embodiments on the network device side. The function may be implemented either via hardware or by executing corresponding software on hardware. The apparatus may be the above network device, or it may be integrated within the network device. As illustrated in FIG. 8, the apparatus 800 may include: a transmitting module 810.

The transmitting module 810 is configured to transmit first information, wherein the first information is used to indicate a type of information carried in a first channel, the first channel being a periodically transmitted channel.

In some embodiments, the type of the information includes at least one of data information or signaling information.

In some embodiments, the type of the information includes one of presence of the signaling information or absence of the signaling information.

In some embodiments, in a case where the type of the information is signaling information, whether the information carried in the first channel further includes data information is determined based on the first information.

In some embodiments, the type of the information includes one of presence of the data information or absence of the data information.

In some embodiments, in a case where the type of the information is data information, whether the information carried in the first channel further includes signaling information is determined based on the first information.

In some embodiments, in a case where the information carried in the first channel includes signaling information, the signaling information is used to indicate the parameter of the second channel.

In some embodiments, the time-domain position of the second channel follows the first channel; or the time-domain position of the second channel does not precede the first channel.

In some embodiments, the second channel includes at least one of at least one downlink channel or at least one uplink channel.

In some embodiments, the parameter of the second channel includes at least one of frequency-domain resource information of the second channel, time-domain resource information of the second channel, modulation and coding information corresponding to the second channel, HARQ process information corresponding to the second channel, redundancy version information corresponding to the second channel, precoding-related information corresponding to the second channel, reference signal information corresponding to the second channel, power control information corresponding to the second channel, transmission resource information of feedback information corresponding to the second channel, or priority information of the second channel.

In some embodiments, the signaling information includes the parameter of the second channel or an offset or differential value of the parameter of the second channel.

In some embodiments, in a case where a plurality of pieces of signaling information are carried in the first channel, the plurality of pieces of signaling information are independently encoded, alternatively, the plurality of pieces of signaling information are encoded jointly.

In some embodiments, in a case where the information carried in the first channel includes the signaling information, the first information is also used to indicate at least one of a format of signaling, content of the signaling, a bit size of the signaling information, a modulation and coding level corresponding to the signaling information, or a coding rate corresponding to the signaling information.

In some embodiments, in a case where the information carried in the first channel includes the signaling information, the coding scheme for the signaling information is determined based on protocol-defined information, or is indicated by the first information.

In some embodiments, the protocol-defined information is used to specify the coding scheme for the signaling information; or the protocol-defined information is used to indicate a correspondence between a bit size of the signaling information and a coding scheme for the signaling information, and the coding scheme for the signaling information is determined based on the bit size of the signaling information and the correspondence.

In some embodiments, in a case where the information carried in the first channel includes both the signaling information and the data information, the signaling information and the data information are independently encoded.

In some embodiments, the transmission resource of the first channel is indicated by the first information.

In some embodiments, in a case where the information carried in the first channel includes both the signaling information and the data information, the first channel occupies a first resource. A second resource occupied by the signaling information within a first resource is determined according to a predefined rule, and a third resource occupied by the data information is the remaining resource in the first resource excluding the second resource. Alternatively, the first channel occupies a first resource, the third resource occupied by the data information within the first resource is determined according to a predefined rule, and a second resource occupied by the signaling information is the remaining resource in the first resource excluding the third resource.

In some embodiments, the predefined rule is associated with at least one of coding rate information of the signaling information, a resource occupation ratio of the signaling information, a maximum amount of resource occupation of the signaling information, a priority of the signaling information, coding rate information of the data information, a resource occupation ratio of the data information, a maximum amount of resource occupation of the data information, or a priority of the data information.

In some embodiments, the second resource occupied by the signaling information includes one of at least one time-domain symbol, at least one frequency-domain resource unit, or at least one resource element.

In some embodiments, the first channel is a downlink channel or a PDSCH.

In some embodiments, the first information includes at least one of higher-layer signaling, downlink control signaling, or activation signaling.

It should be noted that the apparatus provided in the above embodiments is merely an example based on the division of the various functional modules upon implementing its functions. In practice, the above functions may be allocated to different functional modules according to actual needs, that is, the structure of the device may be divided into different functional modules to achieve all or part of the functions described above.

Regarding the device in the above embodiment, the specific ways in which the modules perform operations have been described in detail in the method embodiments of the present disclosure, which are not described herein any further.

FIG. 9 is a schematic structural diagram of a terminal device 900 according to some embodiments of the present disclosure. The terminal device 900 may be used to implement the method performed by the terminal device in the above embodiments. The terminal device 900 may include: a processor 901, a transceiver 902, and a memory 903. Specifically, the transceiver 902 is used to implement transmitting or receiving functions, functioning as the receiving module 710. The processor 901 may be used to perform other processing functions or control transmitting and/or receiving, functioning as the processing module 720.

The processor 901 includes one or more processing cores, wherein the one or more processing cores execute various functional applications and information processing by running software programs and modules.

The transceiver 902 may include a receiver and a transmitter, for example, the transceiver 902 may be implemented as a single wireless communication component. The wireless communication component may include a wireless communication chip and an RF antenna.

The memory 903 may be connected to the processor 901 and the transceiver 902.

The memory 903 may be used to store one or more computer programs executed by the processor, and the processor 901 is used to execute the one or more computer programs to implement the various steps executed by the terminal device in the above method embodiments.

Additionally, the memory 903 may be implemented by any type of volatile or non-volatile storage device or a combination thereof, including but not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In some embodiments, the transceiver 902 is configured to receive first information, wherein the first information is used to indicate a type of information carried in a first channel, the first channel being a periodically transmitted channel.

For details not disclosed in the apparatus embodiments, reference may be made to the above method embodiments, which are not described herein any further.

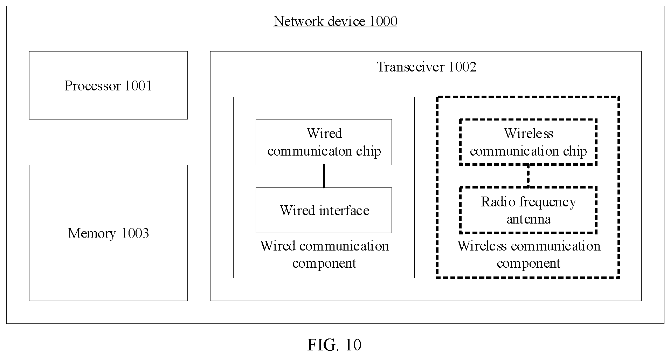

FIG. 10 is a structural schematic diagram of a network device 1000 according to some embodiments of the present disclosure. The network device 1000 may be configured to perform the method performed by the network device in the above embodiments. The network device 1000 may include a processor 1001, a transceiver 1002, and a memory 1003. Specifically, the transceiver 1002 is configured to implement transmitting or receiving functions, which functions as the transmitting module 810. The processor 1001 may be configured to implement other processing functions or to control transmitting and/or receiving.

The processor 1001 includes one or more processing cores, and executes various functional applications and information processing by running software programs and modules.

The transceiver 1002 may include a receiver and a transmitter. For example, the transceiver 1002 may include a wired communication component, which may include a wired communication chip and a wired interface (such as a fiber optic interface). Optionally, the transceiver 1002 may also include a wireless communication component, which may include a wireless communication chip and an RF antenna.

The memory 1003 may be connected to the processor 1001 and the transceiver 1002.

The memory 1003 may be configured to store computer programs runnable by the processor, and the processor 1001 is configured to run the computer programs to perform the various steps performed by the network device in the above method embodiments.

Additionally, the memory 1003 may be implemented by any type of volatile or non-volatile storage device or a combination thereof, including but not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, or a programmable read-only memory (PROM).

In some embodiments, the transceiver 1002 is configured to transmit first information, wherein the first information is used to indicate a type of information carried in a first channel, the first channel being a periodically transmitted channel.

For details not disclosed in the apparatus embodiments, reference may be made to the above method embodiments, which are not described herein any further.

Some embodiments of the present disclosure further provide a computer-readable storage medium. The storage medium stores one or more computer programs. The one or more computer programs, when loaded and run by a processor of a terminal device, cause the terminal device to perform the method for wireless communication performed by the terminal device.

Some embodiments of the present disclosure further provide a computer-readable storage medium storing one or more computer programs, wherein the one or more computer programs, when loaded and run by a processor of a network device, cause the network device to perform the method for wireless communication performed by the network device.

In some embodiments, the computer-readable storage medium includes a ROM, a random-access memory (RAM), a solid-state drive (SSD), an optical disc, or the like. The RAM may include a resistance random-access memory (ReRAM) and a dynamic random-access memory (DRAM).

Some embodiments of the present disclosure further provide a chip. The chip includes programmable logic circuitry and/or one or more program instructions, wherein the chip, when running on a terminal device, cause the terminal device to perform the method for wireless communication performed by the terminal device.

Some embodiments of the present disclosure further provide a chip. The chip includes programmable logic circuitry and/or one or more program instructions, wherein the chip, when running on a network device, cause the network device to perform the method for wireless communication performed by the network device.

Some embodiments of the present disclosure further provide a computer program product or a computer program. The computer program product or the computer program includes one or more computer instructions stored in a computer-readable storage medium. The one or more computer instructions, when loaded from the computer-readable storage medium and executed by a processor of a terminal device, cause the terminal device to perform the method for wireless communication performed by the terminal device.

Some embodiments of the present disclosure further provide a computer program product or a computer program. The computer program product or the computer program includes one or more computer instructions stored in a computer-readable storage medium. The one or more computer instructions, when loaded from the computer-readable storage medium and executed by a processor of a network device, cause the network device to perform the method for wireless communication performed by the network device.

It should be understood that the term "indicate" in the embodiments of the present disclosure means the direct indication, indirect indication, or an associated relationship. For example, A indicating B means that A directly indicates B, for example, B is acquired via A; A indirectly indicates B, for example, A indicates C and B is acquired via C; A and B are associated.

The term "corresponding" and any grammatical variations mean that there is a direct correspondence relationship or indirect correspondence relationship between two objects, an association relationship between two objects, a relationship of indicating or being indicated, or a relationship of configuring and being configured.

In some embodiments of the present disclosure, the term "predefined" is implemented by prestoring corresponding codes, tables, or other means that may be defined to indicate related information in devices (including, for example, terminal devices and network devices), and the present disclosure does not limit the specific implementation thereof. For example, "predefined" refers to "defined" in a protocol.

In some embodiments of the present disclosure, the "protocol" refers to a standard protocol in the communication field including, for example, the LTE protocol, the NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

Additionally, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, wherein the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for wireless communication, performed by a terminal device, the method comprising:
receiving first information, wherein the first information is used to indicate a type of information carried in a first channel, the first channel being a periodically transmitted channel;
wherein the type of the information comprises: at least one of data information or signaling information; or presence of the signaling information or absence of the signaling information; or presence of the data information or absence of the data information.

2. The method according to claim 1, further comprising:
determining, based on the first information, whether the information carried in the first channel further comprises the data information in a case where the type of the information is presence of the signaling information.

3. The method according to claim 1, further comprising:
determining, based on the first information, whether the information carried in the first channel further comprises the signaling information in a case where the type of the information is presence of the data information.

4. The method according to any one of claims 1 to 3, wherein in a case where the information carried in the first channel comprises the signaling information, the signaling information is used to indicate a parameter of a second channel.

5. The method according to claim 4, wherein a time-domain position of the second channel is subsequent to or not earlier than a time-domain position of the first channel.

6. The method according to claim 4 or 5, wherein the second channel comprises at least one of at least one downlink channel or at least one uplink channel.

7. The method according to any one of claims 4 to 6, wherein a parameter of the second channel comprises at least one of frequency-domain resource information of the second channel, time-domain resource information of the second channel, modulation and coding information corresponding to the second channel, hybrid automatic repeat request (HARQ) process information corresponding to the second channel, redundancy version information corresponding to the second channel, precoding-related information corresponding to the second channel, reference signal information corresponding to the second channel, power control information corresponding to the second channel, transmission resource information of feedback information corresponding to the second channel, or priority information of the second channel.

8. The method according to any one of claims 4 to 7, wherein the signaling information comprises a parameter of the second channel, or an offset or differential value of the parameter of the second channel.

9. The method according to any one of claims 1 to 8, wherein in a case where a plurality of pieces of signaling information are carried in the first channel, the plurality of pieces of signaling information are independently encoded or jointly encoded.

10. The method according to any one of claims 1 to 9, wherein in a case where the information carried in the first channel comprises the signaling information, the first information is further used to indicate at least one of a format of signaling, content of the signaling, a bit size of the signaling information, a modulation and coding level corresponding to the signaling information, or a coding rate corresponding to the signaling information.

11. The method according to any one of claims 1 to 10, wherein in a case where the information carried in the first channel comprises the signaling information, a coding scheme for the signaling information is determined based on protocol-defined information or indicated by the first information.

12. The method according to claim 11, wherein
the protocol-defined information is used to specify the coding scheme for the signaling information; or
the protocol-defined information is used to specify a correspondence between a bit size of the signaling information and the coding scheme for the signaling information, wherein the coding scheme for the signaling information is determined based on the bit size of the signaling information and the correspondence.

13. The method according to any one of claims 1 to 12, wherein in a case where the information carried in the first channel comprises both the signaling information and the data information, the signaling information and the data information are independently encoded.

14. The method according to any one of claims 1 to 13, wherein a transmission resource of the first channel is indicated by the first information.

15. The method according to any one of claims 1 to 14, wherein in a case where the information carried in the first channel comprises the signaling information and the data information:
the first channel occupies a first resource, a second resource occupied by the signaling information within the first resource is determined by a predefined rule, and a third resource occupied by the data information is a remaining resource in the first resource excluding the second resource; or
the first channel occupies a first resource, and a third resource occupied by the data information within the first resource is determined by a predefined rule, and a second resource occupied by the signaling information is a remaining resource in the first resource excluding the third resource.

16. The method according to claim 15, wherein the predefined rule is associated with at least one of coding rate information of the signaling information, a resource occupation ratio of the signaling information, a maximum amount of resource occupation of the signaling information, a priority of the signaling information, coding rate information of the data information, a resource occupation ratio of the data information, a maximum amount of resource occupation of the data information, or a priority of the data information.

17. The method according to claim 15, wherein the second resource occupied by the signaling information comprises one of at least one time-domain symbol, at least one frequency-domain resource unit, or at least one resource element.

18. The method according to any one of claims 1 to 17, wherein the first channel is a downlink channel or a physical downlink shared channel (PDSCH).

19. The method according to any one of claims 1 to 18, wherein the first information comprises at least one of a higher-layer signaling, a downlink control signaling, or an activation signaling.

20. A method for wireless communication, performed by a network device, the method comprising:
transmitting first information, wherein the first information is used to indicate a type of information carried in a first channel, the first channel being a periodically transmitted channel;
wherein the type of the information comprises: at least one of data information or signaling information; or presence of the signaling information or absence of the signaling information; or presence of the data information or absence of the data information.

21. The method according to claim 20, wherein in a case where the type of the information is presence of the signaling information, whether the information carried in the first channel further comprises the data information is determined based on the first information.

22. The method according to claim 20, wherein in a case where the type of the information is presence of the data information, whether the information carried in the first channel further comprises the signaling information is determined based on the first information.

23. The method according to any one of claims 20 to 22, wherein in a case where the information carried in the first channel comprises the signaling information, the signaling information is used to indicate a parameter of a second channel.

24. The method according to claim 23, wherein a time-domain position of the second channel is subsequent to or not earlier than a time-domain position of the first channel.

25. The method according to claim 23, wherein the second channel comprises at least one of at least one downlink channel or at least one uplink channel.

26. The method according to any one of claims 23 to 25, wherein a parameter of the second channel comprises at least one of frequency-domain resource information of the second channel, time-domain resource information of the second channel, modulation and coding information corresponding to the second channel, hybrid automatic repeat request (HARQ) process information corresponding to the second channel, redundancy version information corresponding to the second channel, precoding-related information corresponding to the second channel, reference signal information corresponding to the second channel, power control information corresponding to the second channel, transmission resource information of feedback information corresponding to the second channel, or priority information of the second channel.

27. The method according to any one of claims 23 to 26, wherein the signaling information comprises a parameter of the second channel, or an offset or differential value of the parameter of the second channel.

28. The method according to any one of claims 20 to 27, wherein in a case where a plurality of pieces of signaling information are carried in the first channel, the plurality of pieces of signaling information are independently encoded or jointly encoded.

29. The method according to any one of claims 20 to 28, wherein in a case where the information carried in the first channel comprises the signaling information, the first information is further used to indicate at least one of a format of signaling, content of the signaling, a bit size of the signaling information, a modulation and coding level corresponding to the signaling information, or a coding rate corresponding to the signaling information.

30. The method according to any one of claims 20 to 29, wherein in a case where the information carried in the first channel comprises signaling information, the coding scheme for the signaling information is determined based on protocol-defined information or indicated by the first information.

31. The method according to claim 30, wherein
the protocol-defined information is used to specify the coding scheme for the signaling information; or
the protocol-defined information is used to specify a correspondence between a bit size of the signaling information and the coding scheme for the signaling information, wherein the coding scheme for the signaling information is determined based on the bit size of the signaling information and the correspondence.

32. The method according to any one of claims 20 to 31, wherein in a case where the information carried in the first channel comprises both the signaling information and the data information, the signaling information and the data information are independently encoded.

33. The method according to any one of claims 20 to 32, wherein a transmission resource of the first channel is indicated by the first information.

34. The method according to any one of claims 20 to 33, wherein in a case where the information carried in the first channel comprises the signaling information and the data information:
the first channel occupies a first resource, a second resource occupied by the signaling information within the first resource is determined by a predefined rule, and a third resource occupied by the data information is a remaining resource in the first resource excluding the second resource; or
the first channel occupies a first resource, a third resource occupied by the data information within the first resource is determined by a predefined rule, and a second resource occupied by the signaling information is a remaining resource in the first resource excluding the third resource.

35. The method according to claim 34, wherein the predefined rule is associated with at least one of coding rate information of the signaling information, a resource occupation ratio of the signaling information, a maximum amount of resource occupation of the signaling information, a priority of the signaling information, coding rate information of the data information, a resource occupation ratio of the data information, a maximum amount of resource occupation of the data information, or a priority of the data information.

36. The method according to claim 34 or 35, wherein the second resource occupied by the signaling information comprises one of at least one time-domain symbol, at least one frequency-domain resource unit, or at least one resource element.

37. The method according to any one of claims 20 to 36, wherein the first channel is a downlink channel or a physical downlink shared channel (PDSCH).

38. The method according to any one of claims 20 to 37, wherein the first information comprises at least one of higher-layer signaling, downlink control signaling, or activation signaling.

39. An apparatus for wireless communication, comprising:
a receiving module, configured to receive first information, wherein the first information is used to indicate a type of information carried in a first channel, the first channel being a periodically transmitted channel;
wherein the type of the information comprises: at least one of data information or signaling information; or presence of the signaling information or absence of the signaling information; or presence of the data information or absence of the data information.

40. An apparatus for wireless communication, comprising:
a transmitting module, configured to transmit first information, wherein the first information is used to indicate a type of information carried in a first channel, the first channel being a periodically transmitted channel;
wherein the type of the information comprises: at least one of data information or signaling information; or presence of the signaling information or absence of the signaling information; or presence of the data information or absence of the data information.

41. A communication device, comprising: a processor and a memory storing one or more computer programs, wherein the processor is configured to load and run the one or more computer programs to perform the method defined in any one of the claims 1 to 19 or the method defined in any one of claims 20 to 38.

42. A computer-readable storage medium storing one or more computer programs, wherein the one or more programs, when loaded and run by a processor, cause the processor to perform the method defined in any one of the claims 1 to 19 or the method defined in any one of claims 20 to 38.

43. A chip, comprising: programmable electric logic circuitry and/or one or more programs, wherein the chip, when running, is configured to perform the method defined in any one of claims 1 to 19, or to perform the method defined in any one of claims 20 to 38.

44. A computer program product, comprising: one or more computer instructions stored in a computer-readable storage medium, wherein the one or more computer instructions, when loaded and executed by a processor, cause the processor to perform the method defined in any one of claims 1 to 19 or the method defined in any one of the claims 20 to 38.
